Europäisches Patentamt
European Patent Office
Office européen des brevets

(11) Publication number: 0 282 706 A1

(12) **EUROPEAN PATENT APPLICATION**

(21) Application number: 88101229.8

(51) Int. Cl.⁴ A01N 43/30

(22) Date of filing: 28.01.88

The application is published incomplete as filed (Article 93 (2) EPC). The point in the description or the claim(s) at which the omission obviously occurs has been left blank.

(30) Priority: **16.02.87 IT 1938987**

(43) Date of publication of application: **21.09.88 Bulletin 88/38**

(84) Designated Contracting States: **AT BE CH DE ES FR GB GR IT LI LU NL SE**

(71) Applicant: **ENDURA S.p.A.**
**via Pietramellara 5**
**Bologna(IT)**

(72) Inventor: **Tozzi, Antonio**
**Via Petrarca 16a**
**I-Bologna(IT)**

(74) Representative: **Gervasi, Gemma, Dr.**
**NOTARBARTOLO & GERVASI Srl 33, Viale Bianca Maria**
**I-21100 Milano(IT)**

# (54) Use of methylenedioxybenzene derivatives as synergists in compositions for insecticide use.

(57) The use of methylenedioxybenzene derivatives having the following general formula:

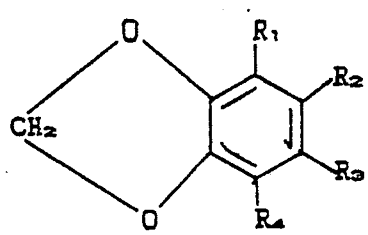

(I)

in which $R_1$, $R_2$, $R_3$ and $R_4$ are H or $CH_2O(CH_2CH_2O)_2R_5$, provided that at least one of $R_1$, $R_2$, $R_3$ and $R_4$ is H and at least one of $R_1$, $R_2$, $R_3$ and $R_4$ is other than H, and $R_5$ is H or an alkyl group with 1-4 C atoms, in compositions for insecticide use in which said derivatives exercise a synergistic action on the various classes of insecticides in general.

EP 0 282 706 A1

# USE OF METHYLENEDIOXYBENZENE DERIVATIVES AS SYNERGISTS IN COMPOSITIONS FOR INSECTICIDE USE

This invention relates to the use of methylenedioxybenzene derivatives possessing synergistic action on the various classes of general insecticides in compositions for insecticide use.

Methylenedioxybenzene derivatives according to the present invention have the following general formula:

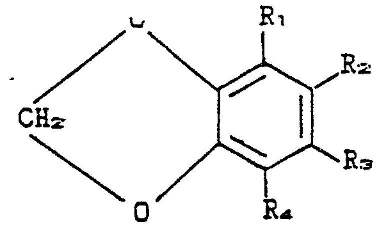

(I)

in which $R_1$, $R_2$, $R_3$ and $R_4$ are H or $CH_2O(CH_2CH_2O)_2R_5$, provided that at least one of $R_1$, $R_2$, $R_3$ and $R_4$ is H and at least one of $R_1$, $R_2$, $R_3$ and $R_4$ is other than H, and $R_5$ is H or an alkyl group with 1-4 C atoms.

The compound most currently used as a synergist for insecticides is piperonyl butoxide, which is prepared from safrole of vegetable origin.

Compared with piperonyl butoxide, the products according to the present invention have advantages in terms both of economy and of application.

Methylenedioxybenzene derivatives are known, as described in GB patent 1.159.089 and USA patent 4.082.774, these being indicated as synergists in association with natural pyrethrins. We have now found that the derivatives according to the present invention can be successfully used as synergists for the various classes of insecticides even if these have structural and pharmokinetic characteristics which differ from those of natural pyrethrins.

Thus the derivatives according to the present invention can be used as synergists in compositions containing synthetic pyrethroids, "quasi-pyrethroids", carbamates, organic phosphorates, avermectins, insect growth regulators etc.

In particular, the applicational advantages of the derivatives according to the invention are noted in association with synthetic pyrethroids such as: allethrin, permethrin, tetramethrin, resmethrin, deltamethrin, cypermethrin, cyfluthrin, fenfluthrin, fluvalinate, flucitrinate, fenproparthrin etc. and their resolved isomers; in association with the so-called "quasi-pyrethroids" such as fenvalerate etc. and their resolved isomers; and in association with carbamates such as carbaryl, methomyl etc., with organic phosphorates such as dichlorvos and chlorpyrifos etc., with avermectins and with insect growth regulators such as diflubenzuron, methoprene, hydroprene etc.

Considering the differences between the characteristics of these insecticides and those of natural pyrethrin, the synergistic action of the methylenedioxybenzene derivatives according to the invention has proved surprising.

In order to compare chemical characteristics, the structural formulas are listed below for natural pyrethrins and for certain insecticide compounds pertaining to the various classes on which the derivatives according to the invention exert synergistic action:

Natural pyrethrins

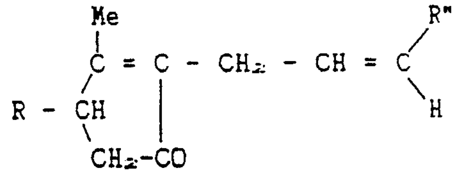

in which:

R is

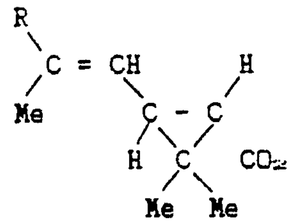

R' is $CH_3$; $-COOCH_3$;

R" is $-CH=CH_2$; $-CH_3$; $-CH_2-CH_3$

Tetramethrin

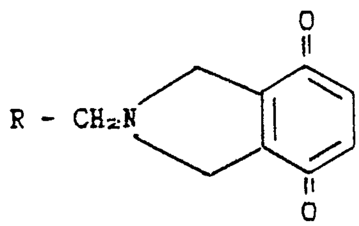

Permethrin

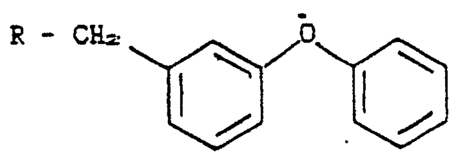

Cypermethrin

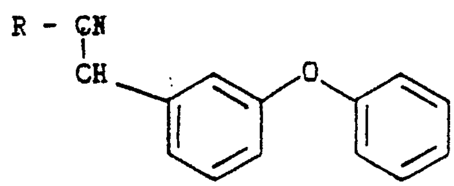

In all the aforelisted formulas, R represents practically the same group;

Fenvalerate

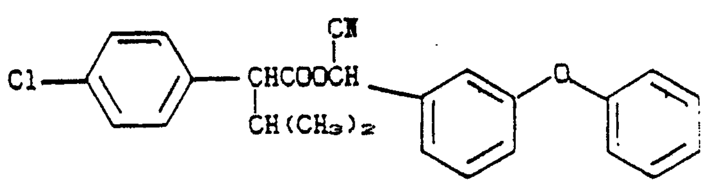

Fluvalinate

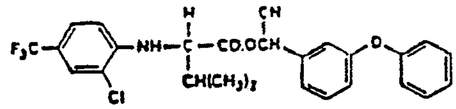

Dichlorvos

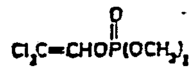

Chlorpyrifos

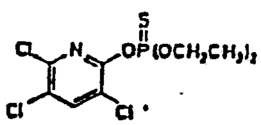

Carbaryl

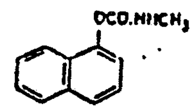

Methomyl

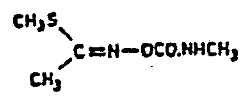

Methoprene

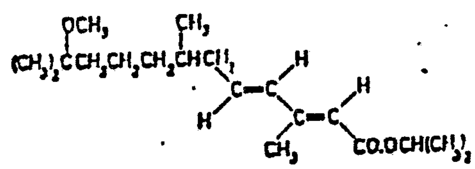

Diflubenzuron

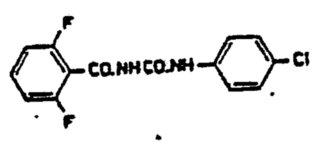

Avermectins

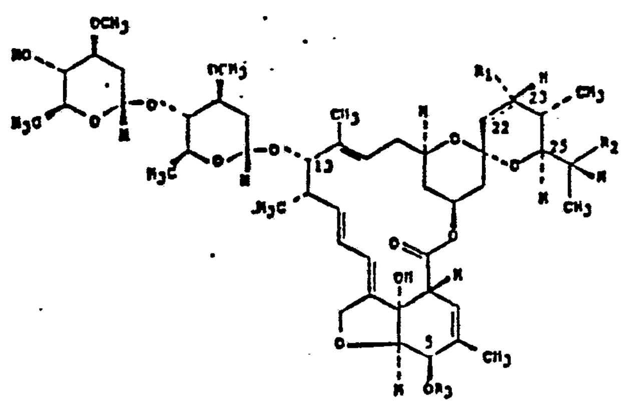

In particular. we have found that synergistic action is exercised on the aforelisted insecticides in a remarkable manner by compounds of the present invention whether these are monosubstituted, bisubstituted or trisubstituted. and that this synergistic action is exercised both by the individual compounds and by mixed compounds.

This latter aspect is particularly important because in preparing the product it is difficult to obtain pure compounds as the reagents can attack the methylenedioxybenzene in different positions simultaneously.

The use of a mixture of three products is particularly advantageous from the yield economy aspect.

We have also found that the synergistic effectiveness of the derivatives according to the invention is not proportional to the content of the methylenedioxy group in the molecule or in the synergistic mixture used, and that weight for weight. the monosubstituted product demonstrates an efficiency which is equal or similar to the bisubstituted and/or trisubstituted product.

This fact is of exceptional economical importance in relation to the high cost of methylenedioxybenzene compared with the cost of the alcohol used.

Consequently an object of the present invention is to use a produce which is homogeneous in composition but contains mixtures of mono, bi and trisubstituted compounds of general formula (I), with the consequent production advantage of not increasing costs by any necessary separation of the individual compounds.

Preferred compounds of the present invention, by virtue of their remarkable advantages both from the operational and applicational viewpoint, are the following:

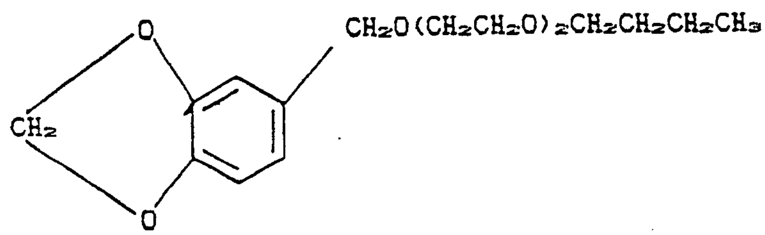

(II)

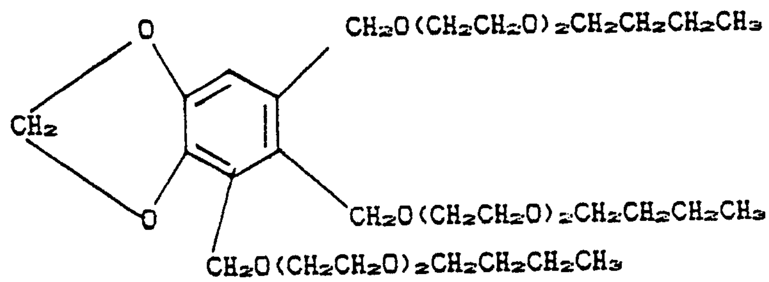

(III)

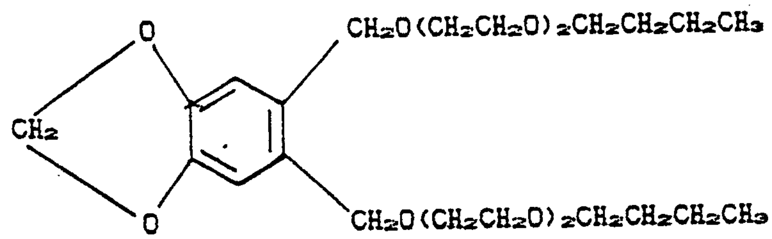

(IV)

and in particular their mixtures.

Binary mixtures of (II)/(III), (II)/(IV) and (III)/(IV) also have considerable synergistic activity, but ternary mixtures are preferred.

Another method for effectively using the compounds according to the invention is in mixtures containing from 1% to 75% of piperonyl butoxide by weight.

In all cases, said compounds have demonstrated high synergistic effectiveness on insecticides for use against domestic and agricultural insects.

Compounds of general formula (I) according to the present invention are prepared preferably starting from chlorinated methylenedioxybenzene derivatives having for example the following formulas:

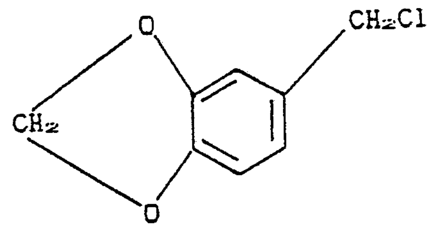

(V)

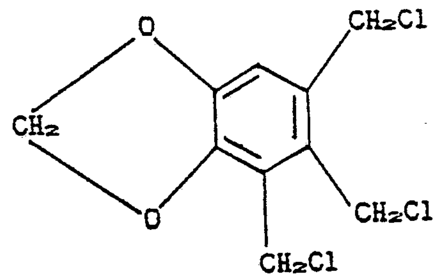

(VI)

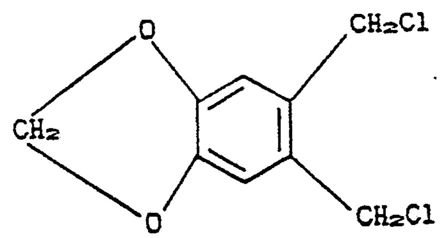

These products are prepared by the action of hydrochloric acid and formaldehyde on methylenedioxybenzene, to obtain compounds with 1, 2 or 3 chloromethylated groups according to the proportions used and other operating conditions.

By reacting these compounds with alcohols of general formula $HO(CH_2CH_2O)_2R_5$ (VII) in which R has the aforesaid meaning, in the presence of proton acceptors, derivatives of general formula (I) are obtained.

The reaction is conducted in a medium consisting of an organic solvent such as benzene or an excess of the actual alcohol, operating at a temperature of between 20 and 100°C.

Compounds of general formula (I) can also be prepared by reacting chlorinated methylenedioxybenzene derivatives with the sodium salt of the alcohol (VII) prepared by reacting this alcohol with caustic soda under hot conditions. The sodium salt is used in slight excess (5%) over the chlorine content of the chlorinated methylenedioxybenzene derivatives.

In compositions for insecticide use, the synergistic derivatives according to the present invention are used in a synergist/insecticide weight rtio of between 100:1 and 1:1; the weight ratio of the binary mixture compounds, however combined, is between 1:1 and 1:2, and the weight ratio of the ternary mixture compounds, however combined, is between 1:1:1; 1:1:2 and 1:2:2.

The synergistic activity of the derivatives according to the present invention was determined in deodorised kerosene solution by the insecticide aerosol formulation, and is described in the following examples.

EXAMPLE 1

Three formulations indicated by 1A. 1B and 1C of the solvent-based aerosol type were prepared. having the following composition:

| | | | |
|---|---|---|---|
| tetramethrin | 0.2% | weight/weight | |
| synergist | 1.0% | " | " |
| methylene chloride | 6.3% | " | " |
| deodorised kerosene | 18.8% | " | " |
| propellent | 73.7% | " | " |
| | 100 | | |

in which the synergist is as follows:

1A: piperonyl butoxide

1B: a mixture of the monosubstituted compound (II) and bisubstituted compound (IV) in the ratio of 1:1

1C: a mixture of the monosubstituted compound (II), bisubstituted compound (IV) and trisubstituted compound (III), in the ratio of 1:1:1.

The tests were carried out on Musca domestica.

The results are given in the following table.

| composition | quantity delivered in g | % felled after 5 min | 10 min | 15 min | % mortality after 24 h |
|---|---|---|---|---|---|
| 1A | 3.2 | 57 | 80 | 93 | 90 |
| 1B | 3.2 | 45 | 85 | 91 | 90 |
| 1C | 3.1 | 59 | 78 | 95 | 92 |

EXAMPLE 2

Four formulations indicated by 2A, 2B, 2C and 2D of the solvent-based aerosol type were prepared, having the following composition

| | | | |
|---|---|---|---|
| tetramethrin | 0.2% | weight/weight | |
| synergist | 1.0% | " | " |
| methylene chloride | 6.3% | " | " |
| deodorised kerosene | 18.8% | " | " |
| propellent | 73.7% | " | " |
| | 100 | | |

in which the synergist is represented as follows:

2A: piperonyl butoxide

2B: monosubstituted compound (II) and bisubstituted compound (IV) (2:1)

2C: bisubstituted compound (IV) and trisubstituted compound (III) (1:1)

2D: monosubstituted compound (II) and trisubstituted compound (III) (1:1)

The tests were carried out on Musca domestica.

The results are given in the following table.

| composition | quantity delivered in g | % felled after 5 min | 10 min | 15 min | % mortality after 24 h |
|---|---|---|---|---|---|
| 2A | 2.7 | 58 | 75 | 93 | 87 |
| 2B | 2.7 | 45 | 68 | 89 | 88 |
| 2C | 2.8 | 52 | 68 | 95 | 91 |
| 2D | 2.7 | 50 | 72 | 87 | 85 |

EXAMPLE 3

Three formulations indicated by 3A, 3B and 3C of the solvent-based aerosol type were prepared, having the following composition:

| | | | |
|---|---|---|---|
| bioallethrin | 0.2% | weight/weight | |
| synergist | 1.0% | " | " |
| methylene chloride | 6.3% | " | " |
| deodorised kerosene | 18.8% | " | " |
| propellent | 73.7% | " | " |
| | 100 | | |

in which the synergist is represented as follows:

3A: piperonyl butoxide

3B: monosubstituted compound (II) and bisubstituted compound (IV) (1:1)

3C: monosubstituted compound (II), bisubstituted compound (IV) and trisubstituted compound (III), (1:1:1).

The tests were carried out on mosquitoes.

The results are given in the following table.

| composition | quantity delivered in g | % felled after 5 min | 10 min | 15 min | % mortality after 24 h |
|---|---|---|---|---|---|
| 3A | 3.5 | 55 | 81 | 95 | 95 |
| 3B | 3.1 | 61 | 73 | 99 | 98 |
| 3C | 3.2 | 57 | 81 | 98 | 98 |

EXAMPLE 4

Four formulations indicated by 4A, 4B, 4C and 4D, of the solvent-based aerosol type were prepared, having the following composition:

| | | | |
|---|---|---|---|
| permethrin | 0.2% | weight/weight | |
| synergist | 1.0% | " | " |
| methylene chloride | 6.3% | " | " |
| deodorised kerosene | 18.8% | " | " |
| propellent | 73.7% | " | " |
| | 100 | | |

in which the synergist is represented as follows:

4A: piperonyl butoxide

4B: piperonyl butoxide and bisubstituted compound (IV) (1:1)

4C: monosubstituted compound (II) and bisubstituted compound (IV), (1:1)

4D: monosubstituted compound (II), bisubstituted compound (IV) and trisubstituted compound (III) (1:1:1)

The tests were carried out on Musca domestica.

The results are given in the following table.

| composition | quantity delivered in g | % felled after 5 min | 10 min | 15 min | % mortality after 24 h |
|---|---|---|---|---|---|
| 4A | 2.8 | 28 | 56 | 89 | 90 |
| 4B | 3.2 | 20 | 58 | 88 | 88 |
| 4C | 2.9 | 25 | 56 | 87 | 87 |
| 4D | 2.7 | 24 | 61 | 92 | 92 |

EXAMPLE 5

Three formulations indicated by 5A, 5B and 5C of the solvent-based aerosol type were prepared, having the following composition:

| | | | |
|---|---|---|---|
| cypermethrin | 0.05% | weight/weight | |
| synergist | 1.0% | " | " |
| methylene chloride | 6.3% | " | " |
| deodorised kerosene | 18.95% | " | " |
| propellent | 73.7% | " | " |
| | 100 | | |

in which the synergist is represented as follows:

5A: piperonyl butoxide

5B: piperonyl butoxide and bisubstituted compound (IV) (1:1)

5C: monosubstituted compound (II), bisubstituted compound (IV) and trisubstituted compound

| composition | quantity delivered in g | % felled after 5 min | 10 min | 15 min | % mortality after 24 h |
|---|---|---|---|---|---|
| 6A | 2.65 | 45 | 71 | 83 | 82 |
| 6B | 2.47 | 49 | 67 | 88 | 83 |
| 6C | 2.7 | 43 | 70 | 81 | 80 |
| 6D | 2.2 | 50 | 67 | 79 | 79 |

EXAMPLE 7

Three formulations indicated by 7A, 7B and 7C of the solvent-based aerosol type were prepared, having the following composition:

| | | | |
|---|---|---|---|
| tetramethrin | 0.2% | weight/weight | |
| synergist | 1.0% | " | " |
| methylene chloride | 6.3% | " | " |
| deodorised kerosene | 18.8% | " | " |
| propellent | 73.7% | " | " |
| | 100 | | |

in which the synergist is represented as follows:

7A: absent
7B: trisubstituted compound (III)
7C: piperonyl butoxide.

The tests were carried out on Musca domestica.
The results are given in the following table.

| composition | quantity delivered in g | % felled after 5 min | 10 min | 15 min | % mortality after 24 h |
|---|---|---|---|---|---|
| 7A | 2.80 | 22 | 42 | 64 | 46 |
| 7B | 2.35 | 32 | 69 | 91 | 90 |
| 7C | 2.40 | 53 | 86 | 94 | 91 |

## Claims

1. The use of methylenedioxybenzene derivatives having the following general formula:

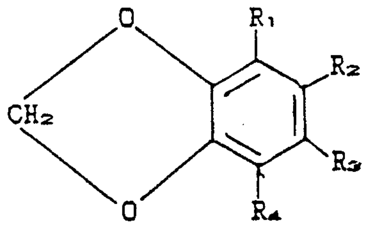

(I)

in which $R_1$, $R_2$, $R_3$ and $R_4$ are H or $CH_2O(CH_2CH_2O)_2R_5$, provided that at least one of $R_1$, $R_2$, $R_3$ and $R_4$ is H and at least one of $R_1$, $R_2$, $R_3$ and $R_4$ is other than H, and $R_5$ is H or an alkyl group with 1-4 C atoms, in compositions for insecticide use in which said derivatives exercise a synergistic action on the various classes of insecticides in general.

2. The use in accordance with claim 1 of methylenedioxybenzene derivatives having the following formulas:

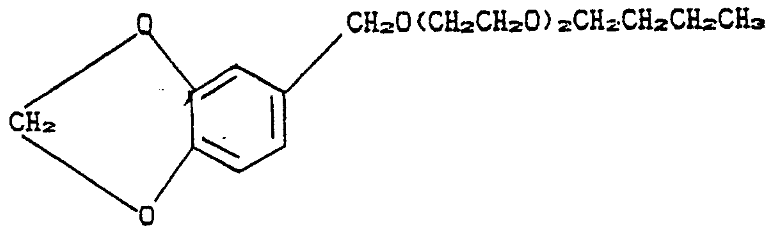

(II)

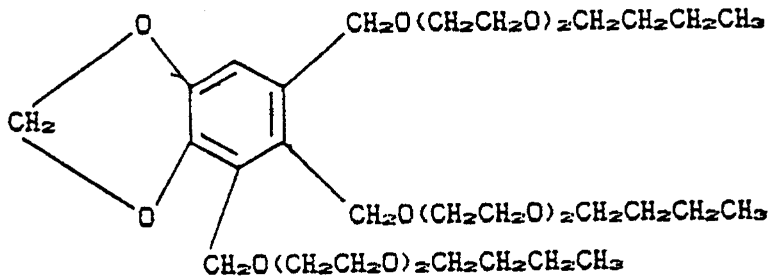

(III)

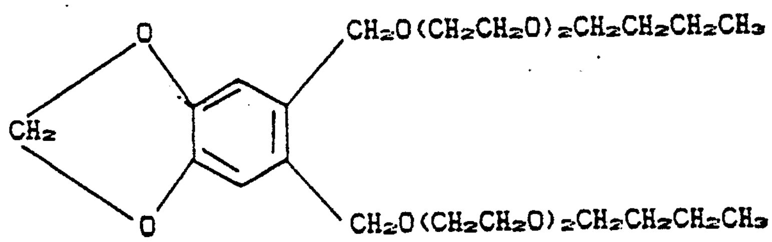

(IV)

3. The use of methylenedioxybenzene derivatives in accordance with claim 1, in association with synthetic pyrethroids, with "quasi-pyrethroids", with carbamates, with organic phosphorates, with avermectins, and with insect growth regulators.

4. The use of methylenedioxybenzene derivatives in accordance with claim 1, in association with insecticide compounds such as: allethrin, permethrin, tetramethrin, resmethrin, deltamethrin, cypermethrin, cyfluthrin, fenfluthrin, fluvalinate, flucitrinate, fenproparthrin and their resolved isomers; fenvalerate and its resolved isomers: carbaryl, methomyl, dichlorvos,chlorpyrifos; avermectins; diflubenzuron, methoprene, hydroprene.

5. The use of methylenedioxybenzene derivatives in accordance with claim 1, said derivatives being the individual monosubstituted or bisubstituted or trisubstituted compounds.

6. The use of methylenedioxybenzene derivatives in accordance with claim 1, said derivatives being the monosubstituted, bisubstituted and trisubstituted compounds in binary mixture.

7. The use of methylenedioxybenzene derivatives in accordance with claim 1, said derivatives being the monosubstituted, bisubstituted and trisubstituted compounds in ternary mixture.

8. The use of methylenedioxybenzene derivatives in accordance with claim 1, in mixtures containing from 1% to 75% by weight of piperonyl butoxide.

9. Compositions for insecticide use containing methylenedioxybenzene derivatives in accordance with claim 1, in association with synthetic pyrethroids, with "quasi-pyrethroids", with carbamates, with organic phosphorates, with avermectins or with insect growth regulators, in a weight ratio to the insecticide of between 100:1 and 1:1.

10. Compositions for insecticide use in accordance with claim 9, characterised by containing a binary mixture of methylenedioxybenzene derivatives in which the weight ratio of the binary mixture compounds, of whatever combination, lies between 1:1 and 1:2.

11. Compositions for insecticide use in accordance with claim 9, characterised by containing a ternary mixture of methylenedioxybenzene derivatives in which the weight ratio of the ternary mixture compounds, of whatever combination, lies between 1:1:1; 1:1:2 and 1:2:2.

European Patent Office

# EUROPEAN SEARCH REPORT

Application Number

EP 88 10 1229

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 550 737 (H. WACHS)<br>* Claims 2-4; example XI * | 1-11 | A 01 N 43/30 |
| X,D | GB-A-1 159 089 (SHELL)<br>* Claims 31-37; page 11; page 3, lines 1-16 * | 1-11 | |
| X | CHEMICAL ABSTRACTS, vol. 99, no. 21, 21st November 1983, page 250, abstract no. 171344p, Columbus, Ohio, US; & JP-A-58 110 504 (SUMITOMO CHEMICAL CO., LTD, TAKASAGO PERFUMERY CO., LTD) 01-07-1983<br>* Whole abstract * | 1-11 | |
| A | SCIENCE, vol. 153, 2nd September 1966, pages 1130-1133, A.A.A.S., Lancaster, PA, US; J.E. CASIDA et al.: "Methylene-C14-Dioxyphenyl compounds; Metabolism in relation to their synergistic action"<br>* Paragraph 1 * | 3,4,9 | |
| | | | **TECHNICAL FIELDS SEARCHED (Int. Cl.4)** |
| | | | A 01 N |

The present search report has been drawn up for all claims

| Place of search | Date of completion of the search | Examiner |
|---|---|---|
| THE HAGUE | 10-06-1988 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)